# EUROPÄISCHE PATENTANMELDUNG

(11) **EP 3 828 219 A1**
(43) Veröffentlichungstag der Anmeldung: **02.06.2021**
(21) Anmeldenummer: 19212341.2
(22) Anmeldetag: 28.11.2019
(51) Int. Cl.: C08G 59/32, C08G 59/42, C08G 59/68, G10K 11/165

(54) **ZUSAMMENSETZUNG ZUR HERSTELLUNG EINER MASSE MIT AKUSTISCH DÄMPFENDEN EIGENSCHAF-TEN UND IHRE VERWENDUNG**

(71) Anmelder: SCS Holding GmbH, 38448 Wolfsburg (DE)
(72) Erfinder: VASILEV, Dimitar, 06132 Halle (DE); SAALMANN, Mario, 06844 Dessau-Roßlau (DE)
(74) Vertreter: Kudla, Christof

(57) **Zusammenfassung**

Die vorliegende Erfindung betrifft eine Zusammensetzung zur Herstellung einer Antidröhnmasse umfassend oder bestehend aus a) einem ersten Monomer umfassend mindestens zwei Epoxidgruppen, b) einem zweiten Monomer umfassend mindestens zwei Carbonsäuregruppen oder mindestens eine Carbonsäureanhydridgruppe, c) einem Katalysator, der eine chemische Reaktion zwischen dem ersten und dem zweiten Monomer katalysiert und d) mindestens einem Füllstoff. Die Vorliegende Erfindung betrifft zudem eine Antidröhnmasse hergestellt aus einer erfindungsgemäßen Zusammensetzung, eine Verwendung einer erfindungsgemäßen Zusammensetzung als akustisch dämpfendes Material, beispielsweise im Fahrzeug- oder Gerätebau. Die vorliegende Erfindung betrifft zudem ein Verfahren zur Applikation einer erfindungsgemäßen Zusammensetzung auf ein Substrat.

## Beschreibung

Die vorliegende Erfindung betrifft eine Zusammensetzung zur Herstellung einer Antidröhnmasse umfassend oder bestehend aus a) einem ersten Monomer umfassend mindestens zwei Epoxidgruppen, b) einem zweiten Monomer umfassend mindestens zwei Carbonsäuregruppen oder mindestens eine Carbonsäureanhydridgruppe, c) einem Katalysator, der eine chemische Reaktion zwischen dem ersten und dem zweiten Monomer katalysiert und d) mindestens einem Füllstoff. Die Vorliegende Erfindung betrifft zudem eine Antidröhnmasse hergestellt aus einer erfindungsgemäßen Zusammensetzung, eine Verwendung einer erfindungsgemäßen Zusammensetzung als akustisch dämpfendes Material, beispielsweise im Fahrzeug- oder Gerätebau. Die vorliegende Erfindung betrifft zudem ein Verfahren zur Applikation einer erfindungsgemäßen Zusammensetzung auf ein Substrat.

Während des Betriebes von Fahrzeugen oder Geräten können dünnwandige Bleche, durch sich bewegende Teile oder laufende Motoren in Schwingungen versetzt werden. Diese Schwingungen können als Körperschall an mit den Blechen verbundene Bauteile weitergegeben werden und auch an weit entfernten Stellen an die Umgebung in Form von für den Menschen hörbaren Schall (Hörschall) abgestrahlt werden. Um für den Menschen wahrnehmbaren Hörschall und Körperschall, der als Vibrationen wahrgenommen werden kann, zu reduzieren, können die Bauteile, insbesondere Bleche, mit schalldämpfenden Materialien beschichtet werden, welche den Schall absorbieren und/oder durch die erhöhte Masse aus Blech und Beschichtung die Resonanzfrequenz der Bleche bzw. des Blech-Beschichtungssystems verändern können. Entsprechende schalldämpfenden Materialien werden als Antidröhnmasse oder Dämpfungsmasse bezeichnet.

Im Automobilbau und Gerätebau werden üblicherweise flüssig applizierbare Antidröhnmassen verwendet, die auch als liquid applied sound damping (LASD) oder spritzbare Dämpfungsmasse (SDM) bezeichnet werden. Diese spritzbaren Dämpfungsmassen werden direkt auf das Bauteil aufgegeben und härten anschließend - meist nach Einwirkung von Wärme - selbstständig aus.

Bisher werden als Antidröhnmassen Acrylatdispersionen oder Vulkanisationssysteme verwendet, die meist Schwefel oder schwefelhaltige Verbindungen aufweisen.

In der EP0793697B1 wird ein Elastomer-Produkt mit akustischen Dämpfungseigenschaften beschrieben, das neben zahlreichen weiteren Bestandteilen auch ein Vulkanisationssystem aufweist, das Schwefel als Vulkanisationsmittel enthalten kann.

In der EP1238000B1 wird ein Gummiwerkstoff zu Schallisolation beschrieben, der Kautschuk oder Kautschukverschnitt, Schwermetalle in Pulverform und Mischungsingredienzien enthält. Als Mischungsingredienzien wird Schwefel als Vulkanisationsmittel angegeben.

In der EP1838778B2 wird eine spritzbare, niedrigviskose Kautschukdämpfungsmasse beschrieben, die neben flüssigen Polyenen und Kurzfasern auch ein Vulkanisationsmittel umfasst, bei dem es sich um eine Mischung aus Schwefel und einem oder mehreren organischen Beschleunigern und Metalloxiden handelt.

Es hat sich gezeigt, dass die üblicherweise verwendeten Antidröhnmassen den Nachteil aufweisen, dass während der Verarbeitung und hierbei insbesondere während des für die Vulkanisation benötigten Erhitzens der Antidröhnmassen Schwefel oder schwefelhaltige Verbindung freigesetzt werden, die neben einer Geruchsbelästigung auch gesundheitliche Probleme verursachen können. Die Freisetzung erfolgt dabei nicht vollständig während der Verarbeitung der Antidröhnmassen, sondern kann aufgrund von Diffusionsvorgängen auch zeitversetzt nach Fertigstellung der Automobile oder Geräte erfolgen, was dazu führen kann, dass der Endverbraucher negativ von den freigesetzten Verbindungen beeinträchtigt wird.

Zudem müssen die üblicherweise verwendeten Antidröhnmassen teilweise sehr viele unterschiedliche Bestandteile aufweisen, um die gewünschten Eigenschaften der Antidröhnmassen zu erhalten. Mit steigender Komplexität einer Zusammensetzung wächst allerdings der Aufwand zur Herstellung der Zusammensetzung und meist der Preis der Zusammensetzung.

Aufgabe der vorliegenden Erfindung war es, eine Zusammensetzung zur Herstellung einer Antidröhnmasse bereitzustellen, bei dem die Emission von Schwefel oder schwefelhaltigen Verbindungen reduziert oder vermindert werden kann. Die aus der Zusammensetzung hergestellten Antidröhnmassen sollten dabei sehr gute schallisolierende bzw. schalldämpfende Eigenschaften aufweisen. Zudem sollte die Zusammensetzung gut verarbeitet werden können, beispielsweise indem Sie aufgespritzt werden kann und sollte möglichst aus wenigen Komponenten bestehen, um die Komplexität der Zusammensetzung zu verringern.

Diese Aufgabe wurde erfindungsgemäß gelöst durch eine Zusammensetzung zur Herstellung einer Antidröhnmasse umfassend oder bestehend aus
a) einem ersten Monomer, umfassend mindestens zwei Epoxidgruppen
b) einem zweiten Monomer, umfassend mindestens zwei Carbonsäuregruppen oder mindestens eine Carbonsäureanhydridgruppe,
c) einem Katalysator, der eine chemische Reaktion zwischen dem ersten und dem zweiten Monomer katalysiert
   und
d) mindestens einem Füllstoff.

Eigene Untersuchungen haben gezeigt, dass bei der Verwendung eines Gemisches aus Monomeren, die mindestens zwei Epoxidgruppen aufweisen, und Monomeren, die mindestens zwei Carbonsäuregruppen oder mindestens eine Carbonsäureanhydridgruppe aufweisen, auf die Verwendung von Schwefel oder schwefelhaltige Verbindungen verzichtet werden kann, da entsprechende Verbindungen nicht als Katalysator für dieses Monomersystem dienen. Hierdurch ist es gelungen, die Emission von Schwefel oder schwefelhaltigen Verbindungen zu verhindern. Gleichzeitig hat es sich gezeigt, dass aus der erfindungsgemäßen Zusammensetzung hergestellte Antidröhnmassen ausgezeichnete Schalldämpfungseigenschaften und eine ausgesprochen gute Haftung auf Substraten aufweisen. Entsprechende erfindungsgemäße Zusammensetzungen lassen sich zudem flüssig oder pastös applizieren.

Zudem hat sich überraschenderweise gezeigt, dass es möglich Monomere zu verwenden, die aus nachwachsenden Rohstoffen gewonnen werden können. Auf Monomere, die aus fosilen Rohstoffen (z.B. Erdöl) gewonnen werden, kann vollständig oder weitestgehend verzichtet werden. Somit kann mit den erfindungsgemäße Zusammensetzungen auch dem ökologischen Aspekt Rechnung getragen werde, dass bei einer thermischen Verwertung der erfindungsgemäßen Zusammensetzungen oder den daraus hergestellten erfindungsgemäßen Antidröhnmassen nur so viel Kohlendioxid freigesetzt wird, wie zuvor durch das Wachstum der nachwachsenden Rohstoffe gebunden wurde.

Zudem ist es bei erfindungsgemäßen Zusammensetzungen vorteilhaft, dass sie als Einkomponentensysteme (1K) vorliegen können. Somit erübrigt sich ein vor der Verwendung von Zweikomponenten notwendige Vermischung der einzelnen Komponenten. Zudem kann die Aushärtung (Polymerisation) der erfindungsgemäßen Zusammensetzung gezielt gesteuert werden, da die Aushärtung erst nach dem Erwärmen auf über 90°C (meist bei ca. 150°C) erfolgt. Somit kann eine vorzeitige Aushärtung während des Transportes (beispielsweise an heißen Sommertagen) ausgeschlossen werden.

Eigene Untersuchungen haben gezeigt, dass sich erfindungsgemäße Zusammensetzungen flüssig applizieren lassen.

Bei Carbonsäureanhydridgruppen handelt es sich um reaktive Carbonsäurederivate, die aus zwei Acylgruppen bestehen, die durch ein Sauerstoffatom miteinander verbunden sind. Durch Hydrolyse können Carbonsäureanhydridgruppen in zwei Carbonsäuregruppen überführt werden.

Eine Zusammensetzung ist erfindungsgemäß bevorzugt, wobei es sich bei dem zweiten Monomer um eine Di-, Tri- oder Tetracarbonsäure oder um ein Carbonsäureanhydrid mit einer, zwei oder drei Anhydridgruppen handelt. Sofern es sich bei dem zweiten Monomer um eine Verbindung handelt, die mindestens eine Carbonsäureanhydridgruppe aufweist, ist es erfindungsgemäß bevorzugt, wenn es sich um ein Carbonsäureanhydrid handelt, das formal durch eine intramolekulare Wasserabspaltung gebildet wurde. In diesem Fall würde die Hydrolyse des Carbonsäureanhydrids zu einem Monomer mit mindestens zwei Carbonsäuregruppen führen und nicht zu zwei Monomeren mit jeweils einer Carbonsäuregruppe. Entsprechende Carbonsäureanhydride weisen die folgende allgemeine Struktur auf 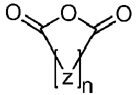 wobei Z ein organisches Strukturelement beliebiger Größe und Substitution, das die zwei Acylgruppen miteinander verbindet und n ist 0 oder 1. Das einfachste Carbonsäureanhydrid, dass unter diese allgemeine Struktur fällt, ist das Bernsteinsäureanhydrid.

Eine Zusammensetzung ist erfindungsgemäß bevorzugt, wobei das zweite Monomer ausgewählt ist aus der Gruppe bestehend aus 1,2,3-Propentricarbonsäure, 5-Norbornen-endo-2,3-dicarbonsäureanhydrid, Acelainsäure, Adipinsäure, Azelainsäure, Bernsteinsäure, Bernsteinsäureanhydrid, Chlorendianhydrid, Citronensäure, Dimerfettsäuren (vorzugsweise hydriert), Dodecandisäure, Fumarsäure, Glutarsäure, Glutarsäureanhydrid, Isocitronensäure, Isophthalsäure, Korksäure, Maleinsäure, Maleinsäureanhydrid, Malonsäure, Methylhexahydrophthalsäureanhydrid, Naphthylanhydrid, Oxalsäure, Phthalsäure, Phthalsäureanhydrid, Pimelinsäure, Pyromellitsäure, Pyromellitsäuredianhydrid, Sebacinsäure, Sulfobernsteinsäure, Terephtalsäure, Trimellithsäureanhydrid, Trimesinsäure und Gemische aus den vorgenannten Monomeren.

Erfindungsgemäß besonders bevorzugt ist eine Zusammensetzung, wobei das zweite Monomer ausgewählt ist aus der Gruppe bestehend aus 1,2,3-Propentricarbonsäure, Adipinsäure, Azelainsäure, Bernsteinsäure, Bernsteinsäureanhydrid, Citronensäure, Dimerfettsäuren (vorzugsweise hydriert), Dodecandisäure, Glutarsäure, Glutarsäureanhydrid, Isocitronensäure, Maleinsäure, Maleinsäureanhydrid, Malonsäure, Oxalsäure, Pimelinsäure, Pyromellitsäure, Pyromellitsäuredianhydrid, Sebacinsäure, Terephtalsäure, Trimesinsäure und Gemische aus den vorgenannten Monomeren.

Eigene Untersuchungen haben ergeben, dass die oben genannten zweiten Monomere und insbesondere die als besonders bevorzugt bezeichneten zweiten Monomere besonders gute Eigenschaften in Antidröhnmassen aufweisen, da sie aufgrund Ihrer chemischen Struktur und den sich aus der chemischen Struktur ergebenen Freiheitsgraden der Verbindungen gut in Schwingungen versetzt werden können, was eine Aufnahme von Schall und eine Überführung der Schallwellen in Wärmeenergie ermöglicht. Verglichen mit beispielsweise häufig als Antidröhnmassen verwendeten Butadien-Kautschuken können hier beispielsweise noch die Acylgruppen (C=O) in Translations-, Streck, und Valenzschwingungen versetzt werden.

Bevorzugt sind erfindungsgemäße Zusammensetzungen, wobei das zweite Monomer (oder sofern mehr als ein zweites Monomer eingesetzt wird, die Gesamtmasse aller zweiten Monomere) in einer Menge von 5 bis 50 Gew.-% vorhanden ist, vorzugsweise in einer Menge von 10 bis 45 Gew.-% vorhanden ist, weiter bevorzugt in einer Menge von 15 bis 35 Gew.-% enthalten ist, weiter bevorzugt in eine Menge von 20 bis 30 Gew.-% enthalten ist, bezogen auf das Gesamtgewicht der Zusammensetzung.

Eine Zusammensetzung ist erfindungsgemäß bevorzugt, wobei das erste Monomer drei, vier, fünf, sechs, sieben, acht, neun, zehn oder elf Epoxidgruppen umfasst. Eigene Untersuchungen haben ergeben, dass eine erfindungsgemäße Zusammensetzung besonders bevorzugt ist, wobei das erste Monomer a) drei oder b) sechs bis acht Epoxidgruppen umfasst.

Eine Zusammensetzung ist erfindungsgemäß bevorzugt, wobei das erste Monomer ausgewählt ist aus der Gruppe bestehend aus epoxidiertem Pflanzenöl, Limonen-1,2:8,9-dioxid, Trimethylpropan-Triglycidylether und Alkyl(C12-C14) glycidyl ether.

Unter einem Pflanzenöl (pflanzlichen Öl) wird ein Fettsäuretriglycerid verstanden, das aus Pflanzen oder Pflanzenteilen gewonnen wird. Die Gewinnung des Öls erfolgt dabei üblicherweise durch Pressen, Extraktion oder Raffination der Öle aus den Pflanzen oder Pflanzenteilen. Die Gewinnung der Öle ist dem Fachmann bekannt. Werden Pflanzensamen zur Ölgewinnung benutzt, werden diese als Ölsaaten bezeichnet. In den Samen kommt das Öl in Form von Lipiden vor, die dessen Zellmembran und Energiereserven darstellen. Abhängig von dem Anteil an ungesättigten Fettsäuren im Öl wird zwischen nichttrocknenden (beispielsweise Olivenöl), halbtrocknenden (beispielsweise Soja- oder Rapsöl) und trocknenden Ölen (beispielsweise Lein- oder Mohnöl) unterschieden.

Mögliche Quellen für Pflanzenöle sind Agaiöl, Algenöl, Arganöl (aus den Früchten des Arganbaums), Avocadoöl (aus dem Fruchtfleisch der Avocado des Avocadobaums), Babaguöl, Baumwollsamenöl (aus den Samen der Baumwollpflanze), Borretschöl oder Borretschsamenöl (aus den Samen der Borretschpflanze), Cupuagu-Butter, Cashew- Schalenöl, Distelöl (auch "Safloröl" genannt, aus den Samen der Färberdistel oder Carthamus), Erdnussöl (aus der Frucht der Erdnusspflanze), Haselnussöl (aus den Haselnüssen des Haselnussbusches), Hanföl (aus den Samen des Speisehanfs), Jatrophaöl (aus dem Samen der Jatropha curcas), Jojobaöl (eigentlich ein flüssiges Wachs; aus den Samen des Jojobastrauchs), Kamelieöl (aus den Samen der Camellia oleifera, Camellia sinensis oder Camellia japonica, Kakaobutter, Kokosöl (aus dem Samenfleisch der Kokosnuss, der Baumfrucht der Kokospalme), Kürbiskernöl (auch als Kernöl bezeichnet; aus den Samenkernen des Steirischen Ölkürbis), Leinöl (aus den reifen Leinsamen des Lein), Leindotteröl (aus den Samen des Leindotters, Familie der Kreuzblütengewächse), Macadamiaöl (aus den Nüssen des Macadamiabaums), *Lallemantia Iberica* Öl (Öl vom Iberischer Drachenkopf), Maiskeimöl (aus den Keimen von Mais), Mandelöl (aus den Mandeln des Mandelbaums), Mangobutter (aus Mangifera indica), Marillenkernöl bzw. Aprikosenkernöl (aus dem Aprikosenkern - also der Mandel des Aprikosensteins - der Aprikose bzw. Marille), Mohnöl (aus den Samenkörnern des Mohns), Nachtkerzenöl, Olivenöl (aus dem Fruchtfleisch und dem Kern der Olive, der Frucht des Olivenbaums, Palmöl (aus dem Fruchtfleisch der Palmfrucht, der Frucht der Ölpalme), Palmkernöl (aus den Kernen der Palmfrucht, der Frucht der Ölpalme), Papayaöl, Pistazienöl, Pekannussöl, Perillaöl aus den Samen der der Perilla-Pflanze (Shiso, Sesamblatt), Rapsöl (aus dem Samen von Raps, Familie der Kreuzblütengewächse), Reisöl, Rizinusöl (aus dem Samen des Wunderbaums), Sanddornöl (aus dem Fruchtfleisch der Sanddornbeere, der Frucht des Sanddornstrauches), Sanddornkernöl (aus den Kernen der Sanddornbeere, der Frucht des Sanddornstrauches), Senföl (aus den Samenkörnern des Schwarzen Senfs), Schwarz- kümmelöl (aus den Samen der Fruchtkapsel der Schwarzkümmelpflanze), Sesamöl (aus den Samen der Sesampflanze), Sheabutter (aus den Samen des Sheanussbaums), Sojaöl (aus den Bohnen der Sojabohne), Sonnenblumenöl (aus den Kernen der Sonnenblume), Tungöl, Walnussöl (aus den Kernen der Nüsse des Walnussbaums), Wassermelonensamenöl, Traubenkernöl (aus den Kernen der Früchte (Weintraube) der Weinpflan- ze bzw. Weinrebe), Weizenkeimöl (aus den Keimen des Weizens) und/oder Zedernöl (aus dem Holz der Libanonzeder). Diese Liste ist nicht als abgeschlossen anzusehen, sie zeigt Möglichkeiten zur Gewinnung von pflanzlichen Ölen, welche zu einer erfindungsgemäßen Zusammensetzung verwendet werden können, nachdem diese Öle epoxidiert wurden.

Die Pflanzenöle werden mit für den Fachmann bekannten Verfahren epoxiert und können anschließend in erfindungsgemäßen Zusammensetzungen verwendet werden. Hierbei ist es insbesondere bevorzugt, wenn die Öle mehrfach ungesättigt sind.

Eine erfindunggemäße Zusammensetzung ist besonders bevorzugt, wenn das epoxidierte Pflanzenöl ausgewählt ist, aus der Gruppe bestehend aus epoxidiertem Sojaöl, epoxidiertem Holunderkernöl, epoxidiertem Rapsöl, epoxidiertem Sonnenblumenöl, epoxidiertem Öl von *Lallemantia Iberica* und epoxidiertem Leinöl.

Eigene Untersuchungen haben überraschenderweise gezeigt, dass diese als besonders bevorzugt gekennzeichneten epoxidierte Pflanzenöle besonders gut geeignet sind, um in erfindungsgemäßen Zusammensetzungen verwendet zu werden und die aus den erfindungsgemäßen Zusammensetzungen gewonnenen Antidröhnmassen zeigen besonders gute schalldämpfende Eigenschaften.

Bevorzugt sind erfindungsgemäße Zusammensetzungen, wobei das erste Monomer (oder sofern mehr als ein erstes Monomer eingesetzt wird, die Gesamtmasse aller ersten Monomere) in einer Menge von 5 bis 50 Gew.-% vorhanden ist, vorzugsweise in einer Menge von 10 bis 45 Gew.-% vorhanden ist, weiter bevorzugt in einer Menge von 15 bis 35 Gew.-% enthalten ist, weiter bevorzugt in eine Menge von 20 bis 30 Gew.-% enthalten ist, bezogen auf das Gesamtgewicht der Zusammensetzung.

Eigene Untersuchungen haben gezeigt, dass es vorteilhaft ist, wenn das Molverhältnis zwischen dem ersten Monomer (oder sofern mehr als ein erstes Monomer eingesetzt wird, die Gesamtmol aller ersten Monomere) und dem zweiten Monomer (oder sofern mehr als ein zweites Monomer eingesetzt wird, die Gesamtmol aller zweiten Monomere) im Bereich von 1,5 zu 1 bis 1 zu 1,5 vorliegt, vorzugsweise von 1,17 zu 1 bis 1 zu 1,18 vorliegt, weiter bevorzugt von 1,09 zu 1 bis 1 zu 1,09 vorliegt. In einigen Ausgestaltungen der vorliegenden Verbindungen ist es bevorzugt, wenn das Molverhältnis zwischen erstem und zweitem Monomer im Bereich von 1,17 zu 1 liegt.

Erfindungsgemäß handelt es sich bei dem Katalysator nicht um Schwefel oder eine schwefelhaltige Verbindung. Erfindungsgemäß bevorzugt umfasst eine erfindungsgemäße Zusammensetzungen weniger als 100 ppm Schwefelatome, vorzugsweise weniger al 50 ppm Schwefelatome, weiter bevorzugt weniger als 5 ppm Schwefelatome.

Erfindungsgemäß bevorzugt umfasst eine erfindungsgemäße Zusammensetzung kein p-Benzochinondioxim, Chinonen, Chinondioximen oder Dinitrosobenzol (insbesondere kein 1,4-Dinitrosobenzol).

Erfindungsgemäß bevorzugt umfasst eine erfindungsgemäße Zusammensetzung kein Diacetylperoxid, Di-tert.butylperoxid, Dicumylperoxid oder Dibenzoylperoxid, insbesondere keine Peroxide.

Eine Zusammensetzung ist erfindungsgemäß bevorzugt, wobei der Katalysator ausgewählt ist aus
- Stickstoffhaltigen Verbindungen, vorzugsweise stickstoffhaltigen organischen Verbindungen,
- Phosphorhaltigen Verbindungen,
- Halogenhaltigen organischen Verbindungen
   und
- Katalysatoren aus der Gruppe der Halbmetalle.

Eine Zusammensetzung ist erfindungsgemäß besonders bevorzugt, wobei der Katalysator ausgewählt ist aus der Gruppe umfassend 1,8-Diazabicyclo[5.4.0]undec-7-en (DBU), 1,5-dia-zabicyclo[4.3.0]-5-nonene (DBN), 1,4- Diazabicyclo[2.2.2]octan (DABCO), 1,5,7-tria-zabicyclo[4.4.0]dec-5-ene (TBD), 7-methyl-1,5,7-triazabicyclo[4.4.0]dec-5-ene (MTBD), Triethanolamin, Tris(dimethylaminomethyl)phenol, Phosphorsäure, 4-(Dimethylamino)-pyridin, Bis(4-methylphenyl)iodonium hexafluorophosphate (CAS Nummer: 60565-88-0), Bis (4-dodecylphenyl)iodonium hexaflurorantimonate (CAS Nummer: 71786-70-4), Bis(4-tert-butylphenyl)iodonium hexafluorophosphate und Gemische aus den vorgenannten Katalysatoren, vorzugsweise wobei der Katalysator ausgewählt ist aus der Gruppe umfassend 1,8-Diazabicyclo[5.4.0]undec-7-en (DBU), Tris(dimethylaminomethyl)phenol, Phosphorsäure, 4-(Dimethylamino)-pyridin, Bis(4-methylphenyl)iodonium hexafluorophosphate (CAS Nummer: 60565-88-0), Bis (4-dodecylphenyl)iodonium hexaflurorantimonate (CAS Nummer: 71786-70-4 und Gemische aus den vorgenannten Katalysatoren.

Bevorzugt sind erfindungsgemäße Zusammensetzungen, wobei der Katalysator (oder sofern mehr als ein Katalysator eingesetzt wird, die Gesamtmasse aller Katalysatoren) in einer Menge von 0,01 bis 7 Gew.-% vorhanden ist, vorzugsweise in einer Menge von 0,05 bis 5 Gew.-% vorhanden ist, weiter bevorzugt in einer Menge von 0,1 bis 3 Gew.-% enthalten ist, weiter bevorzugt in eine Menge von 0,5 bis 4 Gew.-% enthalten ist, bezogen auf das Gesamtgewicht der Zusammensetzung.

Eigene Untersuchungen haben gezeigt, dass erfindungsgemäße Zusammensetzungen besonders gute Eigenschaften aufweisen, wenn als Katalysator die oben aufgeführten Katalysatoren und insbesondere den als bevorzugt gekennzeichneten Katalysatoren verwendet werden.

Eine Zusammensetzung ist erfindungsgemäß bevorzugt, wobei der mindestens eine Füllstoff ausgewählt ist aus der Gruppe bestehend aus Glimmer, Graphit, Blähgraphit, Glasfaser, Schwerspat, Quarzmehl, Kaolin, Kreide, Talkum, Aluminiumoxid, Bentone, Kieselsäureaerosol, Lithopone, Titandioxid, Russ, Schiefermehl, Wollastonit, Dolomit, Magnesiumcarbonat, Gips, Glaspulver, Glaskugeln, Zinksulfid, Siliciumcarbid, Cristoballit und Mischungen aus den vorgenannten Füllstoffen, vorzugsweise wobei der mindestens eine Füllstoff ausgewählt ist aus der Gruppe bestehend aus Glimmer, Graphit, Glasfaser, Schwerspat, Quarzmehl und Mischungen aus den vorgenannten Füllstoffen.

Erfindungsgemäß besonders bevorzugt ist die Verwendung einer Mischung der oben aufgeführten Füllstoffe, insbesondere mit zwei, drei oder vier unterschiedlichen Füllstoffen. Dabei hat es sich als besonders bevorzugt erwiesen, wenn ein faserartiger und ein plättchenförmiger Füllstoff (und ggf. weitere Füllstoffe) miteinander kombiniert werden. Die Kombination von faserartigen und plättchenförmigen Füllstoffen zeigt überaschenderweise besonders gute schalldämpfende Eigenschaften, die aus einem synergistischen Effekt der faserartigen und plättchenförmigen Füllstoffe resultiert.

Erfindungsgemäß besonders bevorzugt ist die Verwendung von Graphit, Glasfasern, Glimmer und Mischungen aus Graphit, Glasfaser und Glimmer als Füllstoffe in erfindungsgemäßen Zusammensetzungen.

Eigene Untersuchungen haben überraschenderweise gezeigt, dass erfindungsgemäße Zusammensetzungen besonders gute Dämpfungseigenschaften aufweisen, wenn als Füllstoffe die oben aufgeführten Füllstoffe und insbesondere die als bevorzugt gekennzeichneten Füllstoffe verwendet werden. Ohne sich auf eine bestimmte Theorie festlegen zu wollen, wird angenommen, dass eine Übertragung von Schwingungen zwischen diesen Füllstoffen und den in der Zusammensetzung enthaltenen ersten und zweiten Monomeren resultierendem Polymer besonders gut stattfindet und dabei eine Umwandlung des Schalls in Wärme erfolgt. Die Mischung aus dem durch Polymerisation aus dem ersten und zweiten Monomer erhaltenen Polymer und den oben beschriebenen Füllstoffen zeigen somit eine synergistische Wirkung und weisen eine höhere Schallabsorption auf, als die einzelnen Komponenten alleine aufweisen würden.

Bevorzugt sind erfindungsgemäße Zusammensetzungen, wobei der Füllstoff (oder sofern mehr als ein Füllstoff eingesetzt wird, die Gesamtmasse aller Füllstoffe) in einer Menge 20 bis 70 Gew.-% vorhanden ist, vorzugsweise in einer Menge von 25 bis 65 Gew.-% vorhanden ist, weiter bevorzugt in einer Menge von 35 bis 55 Gew.-% enthalten ist, weiter bevorzugt in eine Menge von 40 bis 50 Gew.-% enthalten ist, bezogen auf das Gesamtgewicht der Zusammensetzung.

Die Auswahl der Füllstoffe und die eingesetzte Menge der Füllstoffe können die akustischen Eigenschaften beeinflussen, hier hat sich gezeigt, dass insbesondere plättchenförmige Füllstoffe wie z.B. Glimmer einen vorteilhaften Einfluss auf die Dämpfung, d.h. auf den Verlustfaktor, haben. Erfindungsgemäß bevorzugt enthalten erfindungsgemäße Zusammensetzungen plättchenförmigen Pigmente als Füllstoffe mit einem (vorzugsweise durchschnittlichen) Aspektverhältnis von 3 bis 100, vorzugsweise von 5 bis 95 aufweist, insbesondere bevorzugt von 10 bis 90. In einer bevorzugten Ausgestaltung ist das (vorzugsweise durchschnittliche) Aspektverhältnis des Füllstoffes größer als 15. Bei dem Aspektverhältnis (auch "Aspect ratio" oder "Shape- Faktor" genannt) handelt es sich um den Quotienten zwischen dem Durchmesser und der Dicke des Plättchens des Füllstoffes vor dem Vermischen mit den weiteren Komponenten. Ein Aspektverhältnis von 15 bedeutet, dass der Durchmesser des Plättchens 15 mal größer ist, als die Dicke des Plättchens.

Der Verlustfaktor kann im Biegeschwingungsversuch gemäß DIN 53440, Teil 3 bestimmt werden. Erfindungsgemäß bevorzugte Zusammensetzungen bilden Antidröhnmassen aus, die eine extrem hohe Dämpfung aufweisen, d.h. einem Verlustfaktor des beschichteten Blechstreifens d (combi) von > 0,1, vorzugsweise 0,2 oder mehr.

Eine Zusammensetzung ist erfindungsgemäß bevorzugt, wobei die Zusammensetzung zusätzlich Entschäumer bzw. Entlüfter enthält. Entschäumer sind chemische Formulierungen mit ausgeprägter Grenzflächenaktivität, die geeignet sind, unerwünschte Schaumbildung während der Herstellung und Verwendung der erfindungsgemäßen Zusammensetzungen zu unterdrücken oder bereits gebildeten Schaum zu zerstören. Entlüfter sind Additive, die das Verschmelzen mehrerer kleinerer Luftblasen zu einer großen und damit den Aufstieg an die Oberfläche begünstigen. Hierdurch wird der Luftblasenanteil in der Zusammensetzung und in der aus der Zusammensetzung resultierenden Antidröhnmasse reduziert. Es gibt auch Verbindungen, die sowohl Entlüfter als auch Entschäumer sein können.

Eine Zusammensetzung ist erfindungsgemäß bevorzugt, wobei die Entschäumer und/oder Entlüfter ausgewählt sind aus Mineralölentschäumern, Silikonentschäumern, Polymerentschäumern oder Mischungen hieraus.

Bevorzugt sind erfindungsgemäße Zusammensetzungen, wobei der Entschäumer (oder sofern mehr als ein Entschäumer eingesetzt wird, die Gesamtmasse aller Entschäumer) und Entlüfter (oder sofern mehr als ein Entlüfter eingesetzt wird, die Gesamtmasse aller Entlüfter) insgesamt in einer Menge 0,01 bis 3 Gew.-% vorhanden ist, vorzugsweise in einer Menge von 0,05 bis 2,5 Gew.-% vorhanden ist, weiter bevorzugt in einer Menge von 0,1 bis 2 Gew.-% enthalten ist, weiter bevorzugt in eine Menge von 0,5 bis 1,5 Gew.-% enthalten ist, bezogen auf das Gesamtgewicht der Zusammensetzung.

Beispiele für Entschäumer oder Entlüfter sind solche, erhältlich von Byk Chemie Japan Ltd., wie BYK-051, BYK-052, BYK-053, BYK 054, BYK-055, BYK-057, BYK-065, BYK-066, BYK-070, BYK-077, BYK-080, BYK-088, BYK-141, BYK A-501, BYKA-500, BYK A-505, BYKA-515, BYK A-525, BYK A-530, BYK 307, BYK 310, BYK 313, BYK 320, BYK 323 oder BYK 350.

Eine Zusammensetzung ist erfindungsgemäß bevorzugt, wobei die Zusammensetzung zusätzlich mindestens ein Netzmittel enthält.

Netzmittel sind Verbindungen oder Zusammensetzungen, die eine Herabsetzung der Grenzflächenspannung zwischen Füllstoffen oder einer festen Oberfläche und der erfindungsgemäßen Monomer-Zusammensetzungen bewirken. Durch die Zugabe von Netzmitteln kann somit beispielsweise die Haftung zwischen Bindemittel-Monomeren und Füllstoff-Partikeln der erfindungsgemäßen Zusammensetzung bzw. der aus der erfindungsgemäßen Zusammensetzung resultierenden Antidröhnmasse an einem Substrat erhöht werden.

Bevorzugt sind erfindungsgemäße Zusammensetzungen, wobei das Netzmittel (oder sofern mehr als ein Netzmittel eingesetzt wird, die Gesamtmasse aller Netzmittel) in einer Menge 0,1 bis 8 Gew.-% vorhanden ist, vorzugsweise in einer Menge von 0,5 bis 6 Gew.-% vorhanden ist, weiter bevorzugt in einer Menge von 1 bis 5 Gew.-% enthalten ist, weiter bevorzugt in eine Menge von 2 bis 4 Gew.-% enthalten ist, bezogen auf das Gesamtgewicht der Zusammensetzung.

Selbst bei Verwendung eines Netzmittels und eines Entschäumers umfassen die erfindungsgemäßen Zusammensetzungen im einfachsten Fall lediglich sechs unterschiedliche Komponenten. Im vergleich mit anderen Systemen - wie beispielsweise in Beispiel 1 der anfangs erwähnten EP1838778B2 beschrieben - sind es verhältnismäßig wenige Komponenten.

Eine Zusammensetzung ist erfindungsgemäß bevorzugt, wobei das Netzmittel ein Tensid, ein Polyelektrolyt oder eine Mischung aus Tensid und Polyelektrolyt ist.

Eine Zusammensetzung ist erfindungsgemäß bevorzugt, wobei die Zusammensetzung zusätzlich mindestens ein Dispergierhilfsmittel enthält.

Bevorzugt sind erfindungsgemäße Zusammensetzungen, wobei die Zusammensetzung
10 bis 40 Gew.-% des ersten Monomers umfasst,
   und/oder
10 bis 40 Gew.-% des zweiten Monomers umfasst,
   und/oder
0,01 bis 5 Gew.-% Katalysator, umfasst,
   und/oder
30 bis 80 Gew.-% Füllstoffe umfasst,
   und/oder
0,01- 3 Gew.-% Entschäumer und Entlüfter (insgesamt) umfasst,
   und/oder
0,01 bis 6 Gew.-% Netzmittel und Dispergierhilfsmittel (insgesamt) umfasst,
   jeweils bezogen auf das Gesamtgewicht der erfindungsgemäßen Zusammensetzung.

Aufgrund ihrer Viskosität können erfindungsgemäße Zusammensetzungen mit herkömmlichen Pump-, Dosier-, Spritz- oder Extrusions-Einrichtungen für pastöse Materialien appliziert werden. Die besonders bevorzugten Anwendungsfelder sind dabei Innenbeschichtungen des Fahrzeugbodenbereiches, von Türen oder des Dachbereichs. Die erfindungsgemäßen Zusammensetzungen können wegen ihrer Viskosität im Airless-, Air-assisted, Airmix- oder im sogenannten "Swirlspray-Verfahren" oder weiteren gängigen Sprühverfahren wie z.B. dem "Flat-Stream-Verfahren" angewendet werden.

Bevorzugt sind erfindungsgemäße Zusammensetzungen, wobei die Zusammensetzung eine Viskosität nach DIN 53019-1:2008-09bestimmte Viskosität bei 20°C von 1500 mPa·s bis 95.000 mPa·s, vorzugsweise von 16.000 mPa·s bis 75.000 mPa·s, weiter bevorzug von 20.000 mPa·s bis 60.000 mPa·s aufweist.

Ein weiterer Aspekt der vorliegenden Erfindung betrifft eine Antidröhnmasse hergestellt aus einer erfindungsgemäßen Zusammensetzung. Die Antidröhnmasse lässt sich aus den erfindungsgemäßen Zusammensetzungen herstellen, indem den Zusammensetzungen Energie - meist in Form von Wärmeenergie - zugefügt wird. Hierbei reagieren die ersten mit den zweiten Monomeren und es bildet sich ein Polymer aus. Die Reaktion wird dabei durch den anwesenden Katalysator katalysiert. Die Füllstoffe sind an der chemischen Reaktion meist nicht beteiligt und werden meist von dem Polymer umschlossen, ohne eine chemische Bindung mit dem Polymer einzugehen. In einigen Fällen ist es allerdings möglich und auch vorteilhaft, wenn zudem eine chemische Reaktion zwischen Füllstoff und den Monomeren bzw. dem resultierenden Polymer stattfindet. In diesem Fall kann die Schallabsorption noch weiter verbessert werden, da die Leitung des Schalls zwischen Polymer und Füllstoff bzw. die Umwandlung des Schalls in Wärmeenergie verbessert werden kann.

Die genaue chemische Charakterisierung der aus den Monomeren hergestellten Polymere erweist sich - wie bei Polymeren üblich - als sehr schwierig oder nicht möglich, da die häufig vernetzten Polymere aufgrund ihrer hohen Molekularmasse nicht gelöst werden können um entsprechend analysiert werden zu können.

Ein weiterer Aspekt der vorliegenden Erfindung betrifft eine Verwendung einer erfindungsgemäßen Antidröhnmasse als akustisch dämpfendes Material, wobei die Verwendung vorzugsweise im Fahrzeug- oder Gerätebau erfolgt.

Ein weiterer Aspekt der vorliegenden Erfindung betrifft eine Verwendung einer erfindungsgemäßen Zusammensetzung zur Herstellung eines akustisch dämpfenden Materials (Antidröhnmasse), wobei die Verwendung vorzugsweise im Fahrzeug- oder Gerätebau erfolgt.

Erfindungsgemäße Zusammensetzungen können zudem als akustisch dämpfende Klebstoffe oder Dichtstoff verwendet werden.

Ein weiterer Aspekt der vorliegenden Erfindung betrifft ein Verfahren zur Applikation einer erfindungsgemäßen Zusammensetzung, umfassend die folgenden Schritte:
- Herstellen oder Bereitstellen einer erfindungsgemäßen Zusammensetzung,
- Auftragen der hergestellten oder bereitgestellten Zusammensetzung auf ein Substrat, vorzugsweise durch Rakeln, Gießen, Streichen, Sprühen oder Spritzen,
- Thermische Behandlung der aufgetragenen Zusammensetzung, sodass eine erfindungsgemäße Antidröhnmasse resultiert.

Ein erfindungsgemäßes Verfahren ist bevorzugt, wobei das Auftragen der hergestellten oder bereitgestellten Zusammensetzung mittels Airless-, Air-assisted, Airmix- Spritzverfahren oder Flat-Stream-Verfahren auf das Substrat aufgespritzt wird.

Bevorzugt erfolgt die Applikation der erfindungsgemäßen Zusammensetzung im Rohkarrosseriebau in der Automobilindustrie, sodass die Härtung der Zusammensetzungen in einem Temperaturbereich zwischen 80°C und 240 °C in 10 bis 60 Min. stattfinden soll, vorzugsweise Temperaturbereich zwischen 110 und 200°C. Üblicherweise wird zunächst ein Substrat, bei dem es sich um eine Autokarosserie, einen Teil einer Autokarosserie, eine Autotür oder eine Kofferraumtür handeln kann, bereitgestellt und mit einer Grundierung vollflächig oder teilflächig beschichtet. Die erfindungsgemäße Zusammensetzung wird dann anschließend auf die Grundierung aufgetragen. Bei der Grundierung handelt es sich hierbei um die für die spätere Lackierung des entsprechenden Substrates benötige Grundierung und nicht um eine zur Auftragung der erfindungsgemäßen Zusammensetzung benötigten Grundierung. Das Substrat wird in einem Offen erwärmt, wobei meist Temperaturen von 120°C bis 180°C verwendet werden. Hierbei härtet dann sowohl die Grundierung als auch das erfindungsgemäße Substrat aus und bildet dabei die Antidröhnmasse aus.

In den nachfolgenden Beispielen soll die Erfindung näher erläutert werden, wobei die Auswahl der Beispiele keine Beschränkung des Umfanges des Erfindungsgegenstandes darstellen soll.

### Beispiel 1:

In einem evakuierbaren Laborkneter wurde die in der nachfolgenden Tabelle 1 aufgeführten Bestandteile unter Vakuum so lange gemischt, bis sie homogen waren.

**Tabelle 1**

| Bestandteil | Chemische Bezeichnung | Menge |
|---|---|---|
| Erstes Monomer | Epoxidiertes Öl vom Iberischer Drachenkopf | 25 Gew.-% |
| Zweites Monomer | Bernsteinsäure | 25 Gew.-% |
| Katalysator | 1,8-Diazabicyclo[5.4.0]undec-7-en | 1 Gew.-% |
| Füllstoff | Glimmer | 45 Gew.-% |
| Entschäumer | BYK 054 | 1 Gew.-% |
| Netztmittel | | 3 Gew.-% |

Das Ergebnis der akustischen Dämpfungsmessung nach dem Biegeschwingungsversuch gemäß DIN 6721, bei 200 Hz in Abhängigkeit von der Temperatur zeigt, dass die erfindungsgemäßen Dämpfungsmassen über den sehr breiten Temperaturbereich von etwa 0°C bis etwa 45°C einen Biegeverlustfaktor von deutlich oberhalb 0,10 bei einem Belaggewicht von 50 % aufweisen. Dies ist eine deutliche Verbesserung gegenüber den bisher bekannten Kautschukmassen des Standes der Technik sowie anderen akustischen Dämpfungsbeschichtungen.

### Beispiel 2:

In einem evakuierbaren Laborkneter wurde die in der nachfolgenden Tabelle 2 aufgeführten Bestandteile unter Vakuum so lange gemischt, bis sie homogen waren.

**Tabelle 2**

| Bestandteil | Chemische Bezeichnung | Menge |
|---|---|---|
| Erstes Monomer | Epoxidiertes Öl vom Iberischer Drachenkopf | 25 Gew.-% |
| Zweites Monomer | Bernsteinsäureanhydrid | 25 Gew.-% |
| Katalysator | 1,8-Diazabicyclo[5.4.0]undec-7-en | 1 Gew.-% |
| Füllstoff | Glimmer | 45 Gew.-% |
| Entschäumer | BYK 054 | 1 Gew.-% |
| Netzmittel | | 3 Gew.-% |

Das Ergebnis der akustischen Dämpfungsmessung nach dem Biegeschwingungsversuch gemäß DIN 6721, bei 200 Hz in Abhängigkeit von der Temperatur zeigt, dass die erfindungsgemäßen Dämpfungsmassen über den sehr breiten Temperaturbereich von etwa 0°C bis etwa 45°C einen Biegeverlustfaktor von deutlich oberhalb 0,12 bei einem Belaggewicht von 50 % aufweisen. Dies ist eine deutliche Verbesserung gegenüber den bisher bekannten Kautschukmassen des Standes der Technik sowie anderen akustischen Dämpfungsbeschichtungen.

## Patentansprüche

1. Zusammensetzung zur Herstellung einer Antidröhnmasse umfassend oder bestehend aus
a) mindestens einem ersten Monomer, umfassend mindestens zwei Epoxidgruppen,
b) mindestens einem zweiten Monomer, umfassend mindestens zwei Carbonsäuregruppen oder mindestens einer Carbonsäureanhydridgruppe,
c) mindestens einem Katalysator, der eine chemische Reaktion zwischen dem ersten und dem zweiten Monomer katalysiert,
und
d) mindestens einem Füllstoff.

2. Zusammensetzung nach Anspruch 1, wobei es sich bei dem zweiten Monomer um eine Di-, Tri- oder Tetracarbonsäure oder um ein Carbonsäureanhydrid mit einer, zwei oder drei Anhydridgruppen handelt.

3. Zusammensetzung nach einem der vorherigen Ansprüche, wobei das zweite Monomer ausgewählt ist aus der Gruppe bestehend aus 1,2,3-Propentricarbonsäure, 5-Norbornenendo-2,3-dicarbonsäureanhydrid, Acelainsäure, Adipinsäure, Azelainsäure, Bernsteinsäure, Bernsteinsäureanhydrid, Chlorendianhydrid, Citronensäure, Dimerfettsäuren (vorzugsweise hydriert), Dodecandisäure, Fumarsäure, Glutarsäure, Glutarsäureanhydrid, Isocitronensäure, Isophthalsäure, Korksäure, Maleinsäure, Maleinsäureanhydrid, Malonsäure, Methylhexahydrophthalsäureanhydrid, Naphthylanhydrid, Oxalsäure, Phthalsäure, Phthalsäureanhydrid, Pimelinsäure, Pyromellitsäure, Pyromellitsäuredianhydrid, Sebacinsäure, Sulfobernsteinsäure, Terephtalsäure, Trimellithsäureanhydrid, Trimesinsäure und Gemische aus den vorgenannten Monomeren.

4. Zusammensetzung nach einem der vorherigen Ansprüche, wobei das erste Monomer drei oder sechs bis acht Epoxidgruppen umfasst.

5. Zusammensetzung nach einem der vorherigen Ansprüche, wobei das erste Monomer ausgewählt ist aus der Gruppe bestehend aus epoxidiertes Pflanzenöl, insbesondere epoxidiertes Sojaöl, Holunderkernöl, Rapsöl, Sonnenblumenöl, Öl von Lallemantia Iberica und Leinöl, Limonen-1,2:8,9-dioxid, Trimethylpropan-Triglycidylether, Alkyl(C12-C14) glycidyl ether.

6. Zusammensetzung nach einem der vorherigen Ansprüche, wobei der Katalysator ausgewählt ist aus der Gruppe umfassend 1,8-Diazabicyclo[5.4.0]undec-7-en (DBU), 1,5-diazabicyclo[4.3.0]-5-nonene (DBN), 1,4- Diazabicyclo[2.2.2]octan (DABCO), 1,5,7-triazabicyclo[4.4.0]dec-5-ene (TBD), 7-methyl-1,5,7-triazabicyclo[4.4.0]dec-5-ene (MTBD), Triethanolamin, Tris(dimethylaminomethyl)phenol, Phosphorsäure, 4-(Dimethylamino)-pyridin, Bis(4-methylphenyl)iodonium hexafluorophosphate (CAS Nummer: 60565-88-0), Bis (4-dodecylphenyl)iodonium hexaflurorantimonate (CAS Nummer: 71786-70-4), Bis(4-tertbutylphenyl)iodonium hexafluorophosphate und Gemische aus den vorgenannten Katalysatoren.

7. Zusammensetzung nach einem der vorherigen Ansprüche, wobei der mindestens eine Füllstoff ausgewählt ist, aus der Gruppe bestehend aus Glimmer, Graphit, Blähgraphit, Glasfaser, Schwerspat, Quarzmehl, Kaolin, Kreide, Talkum, Aluminiumoxid, Bentone, Kieselsäureaerosol, Lithopone, Titandioxid, Russ, Schiefermehl, Wollastonit, Dolomit, Magnesiumcarbonat, Gips, Glaspulver, Glaskugeln, Zinksulfid, Siliciumcarbid, Cristoballit und Mischungen aus den vorgenannten Füllstoffen.

8. Zusammensetzung nach einem der vorherigen Ansprüche, wobei die Zusammensetzung zusätzlich Entschäumer enthält.

9. Zusammensetzung nach Anspruch 8, wobei die Entschäumer ausgewählt sind aus der Gruppe bestehend aus Mineralölentschäumern, Silikonentschäumern und Polymerentschäumern.

10. Zusammensetzung nach einem der vorherigen Ansprüche, wobei die Zusammensetzung zusätzlich mindestens ein Netzmittel enthält.

11. Zusammensetzung nach Anspruch 10, wobei das Netzmittel ein Tensid, ein Polyelektrolyt oder eine Mischung daraus ist.

12. Zusammensetzung nach einem der vorherigen Ansprüche, wobei die Zusammensetzung
10 bis 40 Gew.-% des ersten Monomers umfasst,
und/oder
10 bis 40 Gew.-% des zweiten Monomers umfasst,
und/oder
0,01 bis 5 Gew.-% Katalysator, umfasst,
und/oder
30 bis 80 Gew.-% Füllstoffe umfasst,
und/oder
0,01- 3 Gew.-% Entschäumer und Entlüfter umfasst,
und/oder
0,01 bis 6 Gew.-% Netzmittel und Dispergiermittel umfasst.

13. Antidröhnmasse hergestellt aus einer Zusammensetzung nach einem der Ansprüche 1 bis 12.

14. Verwendung einer Zusammensetzung nach einem der Ansprüche 1 bis 12 zur Herstellung eines akustisch dämpfenden Materials, wobei die Verwendung vorzugsweise im Fahrzeug- oder Gerätebau erfolgt.

15. Verfahren zur Applikation einer Zusammensetzung nach einem der Ansprüche 1 bis 12, umfassend die folgenden Schritte:
- Herstellen oder Bereitstellen einer Zusammensetzung nach einem der Ansprüche 1 bis 12,
- Auftragen der hergestellten oder bereitgestellten Zusammensetzung auf ein Substrat,
- Thermische Behandlung der aufgetragenen Zusammensetzung.
